(19) **Europäisches Patentamt / European Patent Office / Office européen des brevets**

(11) **EP 2 203 521 B1**

(12) **EUROPÄISCHE PATENTSCHRIFT**

(45) Veröffentlichungstag und Bekanntmachung des Hinweises auf die Patenterteilung:
**08.06.2011 Patentblatt 2011/23**

(51) Int Cl.:
*C08L 77/06* (2006.01)    *C08G 69/26* (2006.01)

(21) Anmeldenummer: **09738033.1**

(22) Anmeldetag: **21.04.2009**

(86) Internationale Anmeldenummer:
**PCT/EP2009/054716**

(87) Internationale Veröffentlichungsnummer:
**WO 2009/132989 (05.11.2009 Gazette 2009/45)**

(54) **POLYAMIDFORMMASSEN, ENTHALTEND COPOLYAMIDE ZUR HERSTELLUNG VON TRANSPARENTEN FORMTEILEN MIT GERINGEM VERZUG IM KLIMATEST**

POLYAMIDE MOULDING MATERIALS CONTAINING COPOLYAMIDES FOR PRODUCING TRANSPARENT MOULDING PARTS WITH LOW DISTORSION IN CLIMATIC TESTING

MATIÈRES À MOULER POLYAMIDES CONTENANT DES COPOLYAMIDES POUR FABRIQUER DES PIÈCES MOULÉES TRANSPARENTES PRÉSENTANT UNE FAIBLE DÉFORMATION LORS D'UN ESSAI CLIMATIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **30.04.2008 EP 08008285**

(43) Veröffentlichungstag der Anmeldung:
**07.07.2010 Patentblatt 2010/27**

(73) Patentinhaber: **EMS-PATENT AG**
**7013 Domat / Ems (CH)**

(72) Erfinder:
• **BÜHLER, Friedrich Severin**
**CH-7430 Thusis (CH)**

• **AEPLI, Etienne**
**CH-7013 Domat/Ems (CH)**
• **BASS, Sepp**
**CH-7013 Domat/Ems (CH)**

(74) Vertreter: **Bremi, Tobias Hans et al**
**Isler & Pedrazzini AG**
**Postfach 1772**
**8027 Zürich (CH)**

(56) Entgegenhaltungen:
**EP-A- 0 001 039    DE-A1- 2 217 016**

**Beschreibung**

Technisches Gebiet

Die Erfindung betrifft neue Polyamidformmassen, die sich durch eine deutlich bessere Verarbeitbarkeit, insbesondere im Spritzguss, bei akzeptabler Deformation im Klimatest, sehr guter Transparenz, geringem Haze und sogar erhöhtem Bioanteil auszeichnen.

Die Erfindung betrifft daher insbesondere neue Formmassen auf der Basis von transparenten Copolyamiden, die zur Herstellung von transparenten Formteilen, insbesondere Spritzgussformteilen mit hohen technischen Anforderungen und hochwertigen Oberflächen, insbesondere im Sichtbereich, eingesetzt werden. Die erfindungsgemäßen Formmassen zeichnen sich weiter durch hohe Zähigkeit, niedrige Wasseraufnahme und geringen Verzug im Klimatest aus. Insbesondere betrifft die vorliegende Erfindung neue Polyamidformmassen auf Basis von transparenten Copolyamiden, die überwiegend auf Monomeren basieren, die aus nachwachsenden oder erneuerbaren Rohstoffen zugänglich sind. Die vorliegende Erfindung betrifft ebenfalls ein Verfahren zur Herstellung der Polyamidformmassen und aus den Formmassen hergestellte Formteile, wie z. B. Gehäuse- oder Displaymaterial für Mobiltelefone, GPS-Geräte, MP3-Player, Brillen, Linsen, Kameras, optische Geräte und Ferngläser.

Besonders bevorzugt bestehen die erfindungsgemäßen Formmassen bzw. die enthaltenen Copolyamide aus mindestens 50 Gew.-% Bioanteil nach ASTM D6866-06a (Bioanteil, dort als biobased content bezeichnet, vgl. z. B. Kap. 3.3.9, Maß für den Anteil an nicht-fossilem, d. h. nachwachsendem Kohlenstoff, vgl. auch Kap. 17). Der Bioanteil wird dabei aus dem Verhältnis der Kohlenstoffisotope $C_{12}$ und $C_{14}$ abgeleitet. Da sich dieses Verhältnis bei fossilen und nachwachsenden Rohstoffen deutlich unterscheidet, kann der Bioanteil an den erfindungsgemäßen Polyamidformmassen messtechnisch einfach als eindeutig produktcharakterisierende Eigenschaft nachgewiesen werden.

Hochwertige Oberflächen werden als Unterstützung einer "High End Quality" Positionierung von Autoausstattungen, Haushaltsgeräten, Unterhaltungselektronik, Sportgeräten und leicht zu reinigenden Industrie-Oberflächen eingesetzt. Dazu werden hohe Ansprüche an den Werkstoff gestellt, der neben dem hochwertigen Aussehen bruchsicher, fließfähig, dehnfähig und verzugsarm sein muss. Das erfordert geringe Volumenänderungen durch Kristallisation und geringe Feuchte-Aufnahme. Ferner wird eine ausgezeichnete Abriebfestigkeit und dynamische Belastbarkeit verlangt, was typische Eigenschaften von dehnfähigen Polyamiden sind. Formteile aus den erfindungsgemäßen Polyamidformmassen besitzen daher eine ausgezeichnete Transparenz, Zähigkeit und Abriebfestigkeit. Hohe chemische Resistenz und hohe Belastbarkeit bei Wechselbiegebeanspruchung erlauben diesen Formteilen Einsätze in robuster Umgebung.

Die erfindungsgemäßen Formmassen können auf bekannten Verarbeitungsanlagen nach bekannten Verfahren zu hochwertigen Formteilen verarbeitet werden. Hochwertige Formteile können, wie schon oben erläutert, als Gehäuse- oder Displaymaterial für Mobiltelefone, GPS-Geräte, MP3-Player, Brillen, Linsen, Kameras, optische Geräte, Ferngläser etc. eingesetzt werden.

Anwender, die sich z. B. nach der Normengruppe ISO 14000 zertifizieren lassen wollen, verpflichten sich zum nachhaltigen Wirtschaften. Sie erstellen beispielsweise Lebenszyklusanalysen (Life cycle assessment, LCA) über die $CO_2$-Bilanz von Produkten. Dazu trägt eine kurze Zeitspanne zwischen Freisetzung von $CO_2$ (Quelle) und erneute Immobilisierung (Senke) bei, wie sie durch die erfindungsgemäße Verwendung biologisch nachwachsender Rohstoffe mit den angegebenen Werten für den Bioanteil möglich ist. Der Fachmann steht somit vor dem Problem, ökologisch vorteilhafte Werkstoffe einsetzen zu müssen, die bisher mit nachteiligen Werkstoffeigenschaften verbunden waren. Die Erfindung stellt in einer Ausführungsform insofern eine Lehre zur Überwindung dieses Problems dar, da sie also überraschenderweise ein unerwartet hochwertiges transparentes Copolyamid als Werkstoff zur Verfügung stellt, welches dennoch ökologisch im wesentlichen unbedenklich ist, weil es weitgehend aus nachwachsenden oder erneuerbaren Rohstoffen aufgebaut ist.

Stand der Technik

Die Ausgangsverbindungen bzw. Monomere für Kunststoffe werden heute im allgemeinen aus fossilen Quellen (Erdöl) gewonnen. Allerdings sind diese Ressourcen begrenzt, so dass Ersatzstoffe gesucht werden. Daher steigt das Interesse an nachwachsenden Rohstoffen, die zur Herstellung von "Biokunststoffen" oder Kunststoffen mit einem hohen Bioanteil verwendet werden können. Durch den chemischen Prozess des Crackens und die erneute Polymerisation ist man heute in der Lage, Molekülketten herzustellen, die vergleichbare Eigenschaften besitzen können, wie jene auf Erdölbasis. Mögliche Ausgangspflanzen sind z. B. Pflanzen, die Pflanzenöle wie z. B. Rizinusöl, Tallölfettsäuren sowie Öl-, Linol- oder Linolensäure produzieren. Erucasäure wird z. B. aus den Samen von Raps, Senf, Goldlack oder Kresse gewonnen.

Aufgrund der vor allem weltweit steigenden Erdölpreise und des Energiehungers, aber auch aufgrund der politischen Instabilität in den Förderländern, werden daher nachwachsende Rohstoffe auch für die Kunststoffbranche zu einer echten Alternative.

Aufgrund ihrer positiven Eigenschaften stellen Biokunststoffe in vielen Bereichen eine echte Alternative zu herkömmlichen, fossilen Kunststoffen dar. Polyamide mit Bioanteilen über 50% sind daher denkbar. Es handelt sich aber dann um teilkristalline Polyamide mit Glasübergangstemperaturen von kleiner 80C, die zudem nicht transparent sind. Heutzutage werden zwar immer noch typische Vertreter von teilkristallinen Polyamiden wie Polyamid 6, Polyamid 11, Polyamid 66, Polyamid 69, Polyamid 610 etc. auf Basis von erdölbasierenden Monomeren hergestellt. Theoretisch ist es aber möglich, hier einen Bioanteil von nahezu 100% zu erzielen.

Unabhängig von der Rohstoffbasis müssen die transparenten Polyamidformmassen aber dennoch die hohen Anforderungen der Kunden erfüllen, d. h. neben sehr guten optischen Eigenschaften müssen die mechanischen Eigenschaften und die Chemikalienbeständigkeit auf hohem Niveau liegen. Darüber hinaus muss auch ein spezifizierter Klimatest bestanden werden (siehe weiter unten).

D E 43 10 970 A 1 beschreibt transparente, amorphe Polyamidformmassen mit guter Spannungsrissbeständigkeit und Schlagzähigkeit sowie guter Beständigkeit gegen Alkohole, Ester, Ketone und kochendes Wasser, welche durch Polykondensation von aliphatischen Dicarbonsäuren mit trans, trans-Bis-(4-aminocyclohexyl)-methan (PACM) und gegebenenfalls anderen Diaminen erhalten wurden. Die gearbeiteten Beispiele der DE 43 10 970 A1 beziehen sich jedoch ausschließlich auf die Homopolyamide PACM10 und PACM 12. Für theoretisch mögliche Copolyamide mit einem zweiten vom ersten Diamin unterschiedlichen Diamin werden aber überhaupt keine Diamin-Zusammensetzungen angegeben und damit auch keine Hinweise gegeben, dass diese theoretischen Zusammensetzungen vorteilhafte Eigenschaften aufweisen könnten.

DE 100 09 756 A 1 beschreibt Polyamid-Mischungen mit verbesserter Transparenz und Chemikalienbeständigkeit ohne Einbußen in den mechanischen Eigenschaften. Die Mischungen bestehen aus amorphen oder mikrokristallinen Polyamiden und aus teilkristallinen Polyamiden sowie zwei verschiedenen Phosphoradditiven. Die für das amorphe oder mikrokristalline Polyamid angegebene Formel ermöglicht eine große Vielfalt an Kombinationsmöglichkeiten von Diaminen und aliphatischen Dicarbonsäuren als Ausgangskomponenten. Eine spezifische Kombination zweier unterschiedlicher Diamine, geschweige denn eine spezifische Zusammensetzung mit besonderen Eigenschaften (wie z. B. PA MACM10/1010) wird jedoch nicht beschrieben. In den Beispielen werden amorphe Polyamide auf Basis immer nur eines Diamins, dem Bis-(4-amino-3-methyl-cyclohexyl)-methan (MACM), in Kombination mit einer aromatischen Dicarbonsäure, der Isophthalsäure (IPS), und Lactam-12 dargestellt.

DE 22 17 016 A1 beschreibt PACM-basierte Polyamidformmassen zur Herstellung von Polyamidfasern, die eine verbesserte Anfärbbarkeit und eine verbesserte Beständigkeit gegenüber Verformungen bei erhöhten Temperaturen besitzen. Die beschriebenen PACM 10-12 Polyamide führen zu mikrokristallinen bzw. trüben Systemen, die aber gerade bei der Herstellung von Polyamidfasern benötigt werden bzw. dort, z.B. wegen der erforderlichen Verstreckbarkeit der Fasern, erwünscht sind. Die in der DE 22 17 016 beschriebenen Polyamide, insbesondere Polyamid PACM 10-12, führen daher nicht zu ausreichend transparenten Formteilen, die gleichzeitig auch eine hohe Deformation im Klimatest aufweisen.

EP-A-0 001 039 beschreibt transparente Polyamide, erhalten durch Polykondensation von Mischungen stellungsisomerer Diaminocyclohexanmethane und gegebenenfalls weiterer Diaminen und Acelainsäure und gegebenenfalls Isophthalsäure und/oder Adipinsäure.

Darstellung der Erfindung

Der Erfindung liegt demnach die Aufgabe zugrunde, Formmassen auf Basis von transparenten Copolyamiden bereit zu stellen, die zur Herstellung von transparenten Formteilen, insbesondere transparenten Spritzgussformteilen mit hohen technischen Anforderungen und hochwertigen Oberflächen ("High End Quality"), insbesondere im Sichtbereich, eingesetzt werden können, die aber nicht die für die Verarbeitung unvorteilhaft hohen Glasübergangstemperaturen der bekannten transparenten Homopolyamide aufweisen. Die Formmassen sollen sich durch hohe Zähigkeit, niedrige Wasseraufnahme, geringen Verzug im Klimatest, d. h. eine maximale Deformation von 4 mm und eine verbesserte Verarbeitbarkeit, insbesondere im Spritzguss, auszeichnen. Desweiteren soll es möglich sein, den Werkstoff auf Basis von nachwachsenden Rohstoffen basieren zu lassen.

Diese Aufgabe wird erfindungsgemäß gelöst durch die Polyamidformmassen auf Basis von transparenten Copolyamiden zur Herstellung von transparenten Formteilen, insbesondere von Spritzgussformteilen mit hoher Zähigkeit, niedriger Wasseraufnahme und geringem Verzug im Klimatest, insbesondere einer Deformation des Formteils im Klimatest von höchstens 4 mm, bevorzugt von höchstens 3 mm und besonders bevorzugt von höchstens 2 mm, wobei im Klimatest die Durchbiegung einer Platte der Dimension 100 x 100 x 2 mm unter Eigenlast bei einer Temperatur von 55°C und einer relativen Feuchte von 95% bestimmt wird, und hierzu die Platte an einer Kante um 25 mm angehoben und die Durchbiegung in der Mitte (Lageänderung gegenüber dem Ausgangszustand der Platte nach 168 Stunden) gemessen wird, wobei die Formmassen enthalten:

(A) 40 bis 100 Gew.-% mindestens eines transparenten Copolyamids mit einer Glasübergangstemperatur ($T_g$) von wenigstens 80°C und höchstens 150°C, aufgebaut aus

mindestens zwei voneinander verschiedenen Diaminen, ausgewählt aus einer Mischung aus (a) 50 bis 90 Mol-% Bis-(4-amino-3-methylcyclohexyl)-methan (MACM) und/oder Bis-(4-Amino-3-ethyl-cyclohexyl)-methan (EACM) und/oder Bis-(4-Amino-3,5-dimethy-cyclohexyl)-methan (TMACM) und (b) 10 bis 50 Mol-% aliphatisches Diamin mit 9 bis 14 Kohlenstoffatomen, insbesondere Decandiamin, besonders bevorzugt mindestens 20 Mol-% Decandiamin, jeweils bezogen auf die Gesamtmenge an Diaminen, sowie

- aus einer oder mehreren aliphatischen Dicarbonsäuren, insbesondere mit 6 bis 36 Kohlenstoffatomen,

(B) 0 bis 60 Gew.-% mindestens eines weiteren Polymeren, ausgewählt aus der Gruppe, bestehend aus amorphen oder teilkristallinen Homo- oder Copolyamiden, Polyetheresteramiden, Polyetheramiden, Polyesteramiden oder deren Gemischen,

(C) 0 bis 10 Gew.-% übliche Additive, ausgewählt aus der Gruppe, bestehend aus UV-Stabilisatoren, Hitzestabilisatoren, Radikalfängern und/oder Verarbeitungshilfsstoffen, Einschlussverhinderern, Gleitmitteln, Entformungshilfsstoffen, Weichmachern, funktionellen Additiven zur Beeinflussung der optischen Eigenschaften, insbesondere des Brechungsindexes, Schlagzähmodifikatoren, nanoskaligen Füll- und/oder Zuschlagsstoffen, optischen Aufhellern, Farbstoffen oder Mischungen davon, wobei die Summe der Komponenten (A), (B) und (C) 100 Gew.-% ergibt.

Diese Aufgabe wird weiterhin gelöst durch das Verfahren gemäß Anspruch 12 zur Herstellung der Polyamidfommassen, wobei die Herstellung der Polymerkomponenten (A) und (B) in bekannten Druckgefäßen erfolgt, mit einer Druckphase bei 250°C bis 320°C mit einer nachfolgenden Entspannung bei 250°C bis 320°C, mit einer nachfolgenden Entgasung bei 260°C bis 320°C sowie Austragen der Polyamidformmassen in Strangform, Abkühlen, Granulieren und Trocknen des Granulats, Compoundieren der Komponenten (A), und gegebenenfalls (B), und gegebenenfalls (C) als Granulat und Formen in einem Extruder bei Massetemperaturen von 220°C bis 350°C zu einem Strang, Schneiden mit geeigneten Granulatoren zu Pellets, wobei während der Compoundierung Additive zugegeben werden können, die zur Ausrüstung der Formmasse erwünscht sind, wie z. B. Verarbeitungsstabilisatoren, Farbpigmente, UV-Absorber, Hitzestabilisatoren, Flammschutzmittel und andere transparente Polyamide oder Polyamid 12.

Diese Aufgabe wird schließlich gelöst durch die Formteile gemäß den Ansprüchen 13 bis 16, erhältlich aus den Polyamidformmassen gemäß einem der Ansprüche 1 bis 11 mittels Spritzgießverfahren und Spritzprägeverfahren bei Massetemperaturen von 230°C bis 320°C, wobei das Werkzeug mit Temperaturen von 40°C bis 130°C eingestellt wird und wobei gegebenenfalls das Werkzeug mit Temperaturen von 40°C bis 130°C nach dem Füllen der Kavität einen Prägedruck auf das heiße Formteil aufbringt.

In den Unteransprüchen sind vorteilhafte Ausführungsformen der Erfindung enthalten.

Die erfindungsgemäßen Formmassen weisen in einer bevorzugten Ausführungsform einen Bioanteil gemäß ASTM D6866-06 von wenigstens 50% und eine Glasübergangstemperatur von größer 80°C und höchstens 150°C auf. Die Transparenz einer aus der transparenten Formmasse hergestellten Platte mit Dicke von 2mm, gemessen als Lichttransmission gemäß ASTM D 1003, beträgt über 85% und der Haze (Trübung) maximal 10%. Für die angestrebte Verwendung der erfindungsgemäßen Formmassen werden hohe Steifigkeiten (Zug-E-Modul größer 1300 MPa) und hohe Zähigkeiten (Schlagzähigkeit bei 23°C: ohne Bruch) erzielt. Weiterhin wird ein geringer Verzug im Klimatest, mit den aus den erfindungsgemäßen Formmassen hergestellten Formkörpern erzielt. Dabei beträgt die Durchbiegung (deformation) einer Platte der Dimension 100 x 100 x 2mm unter Eigenlast im Klimatext (55°C / 95% relative Feuchte / Dauer: 168 h) höchstens 4 mm, bevorzugt höchstens 3 mm und besonderes bevorzugt höchstens 2 mm, wenn die Durchbiegung in der Mitte der Platte gemessen wird.

Als Monomere mit natürlicher Rohstoffbasis stehen heute nur aliphatische Monomere zur Verfügung. Sie müssen mit cycloaliphatischen, aromatischen oder verzweigten Monomerbausteinen kombiniert werden, um transparente Produkte zu erhalten. Der geforderte Bioanteil von wenigstens 50% verlangt aber hohe Mengen an aliphatischen Anteilen, wodurch zum einen die Glasübergangstemperatur ($T_g$), die Steifigkeit und die Lichttransmission (als Maß für die Transparenz) herabgesetzt und zum anderen die Trübung (Haze) erhöht wird. Hier sei beispielhaft eine Zusammensetzung des Typs PA10I/1010 genannt, die einen Bioanteil über 50% aufweist. Mit hohen Konzentration des Systems 10I (I = Isophthalsäure) wird ein Tg von größer 80°C erreicht, die Transparenz überschreitet 90%, der Haze liegt aber mit 20% außerhalb des für hochwertige optische Anwendungen tolerierbaren Bereiches.

Zusammensetzungen des Typs MACM10/1010 oder MACM14/1014 mit einem Bioanteil von über 50% sind ebenfalls bevorzugte Vertreter dieses Copolyamidtyps. Die Transparenz ist sehr gut, der Haze akzeptabel. Der erreichbare $T_g$ liegt im erfindungsgemäßen Zusammensetzungsbereich über 80°C und bei höchstens 150°C.

Überraschenderweise wurde durch die Erfinder der vorliegenden Anmeldung festgestellt, dass die Copolyamide MACM 6-36 / 6-36 6-36, bevorzugt die Copolyamide MACM 9-18 /9-14 9-18, insbesondere die Copolyamide MACM 9-18 / 10 9-18 oder MACM 10-14 / 10 10-14 die gewünschten Eigenschaften aufweisen. Beispielsweise haben die Copolyamide MACMI0/1010 mit einem MACM10-Anteil zwischen 66 und 46 Mol-% eine Glasübergangstemperatur von wenigstes 89°C und der Bioanteil liegt zwischen 50 und 75%. Der Haze, gemessen an Platten der Dicke 2mm, liegt unter 5%, die Transmissionswerte liegen mit über 93% auf einem hohem Niveau. Der Glanz, gemessen unter einem Winkel von 20°, erreicht Höchstwerte mit ca. 150. In hochtransparenten Materialien steigen die Glanzwerte über 100%, da die untere Oberfläche ebenfalls Licht reflektiert, das zur oberen Oberfläche hinzuaddiert wird.

Der Wert der Lichttransmission, welche als Maß für die Transparenz verwendet wird, ist dabei im Rahmen der vorliegenden Anmeldung stets als bestimmt nach der Methode ASTM D 1003 (Lichtart CIE-C) zu verstehen. Die Messung der Lichttransmission wurde dabei in den unten angeführten Experimenten auf einem Gerät mit dem Namen Haze Guard Plus der Firma BYK Gardner (DE) an Rundplatten 70 x 2mm oder Platten der Dimension 60 x 60 x 2mm durchgeführt. Der Transmissionswert wird für den sichtbaren Wellenlängenbereich definiert nach CIE-C d. h. mit wesentlichen Intensitäten ca. zwischen 400 und 770nm, angegeben. Die Rundplatten 70 x 2mm werden z. B. dafür auf einer Arburg Spritzgussmaschine im polierten Werkzeug hergestellt, wobei die Zylindertemperatur zwischen 200°C und 340°C und die Werkzeugtemperatur zwischen 20°C und 140°C liegt.

Die erfindungsgemäßen transparenten Copolyamide weisen somit die hier definierte Lichttransmission auf und besitzen entweder eine amorphe oder mikrokristalline Morphologie. Bevorzugtermassen handelt es sich bei den erfindungsgemäßen Copolyamiden um Polyamid-Systeme, welche, in hochmolekularer Form und ohne weitere Bestandteile verarbeitet, transparente Formteile ergeben, d. h. die Dimension der Kristallite ist unterhalb der Wellenlänge des sichtbaren Lichtes.

Im übrigen sind die erfindungsgemäßen MACM-, TMACM- und EACM-basierten Polyamide über den gesamten beanspruchten Zusammensetzungsbereich hochtransparent und weisen nur geringen Haze auf.

Bevorzugt weisen die erfindungsgemäßen transparenten Copolyamide eine geringe Schmelzwärme, d. h. eine Schmelzwärme von < 5 J/g auf.

Die aus den erfindungsgemäßen, unverstärkten Formmassen hergestellten Formteile zeigen Steifigkeiten mit E-Moduli von 1300 bis 2000 MPa, bevorzugt mit E-Moduli von 1500 bis 2000 MPa. Die Prüfkörper zur Messung der Schlagwerte nach Charpy blieben bei Raumtemperatur (23°C) und bei -30°C ohne Bruch.

Bevorzugtermaßen beruht die Polyamidkomponente (A) zu mehr als 50% auf nachwachsenden Rohstoffen. Dies wird erreicht, indem hauptsächlich Monomere, wie z. B. Azelainsäure, Sebacinsäure, Tetradecandisäure, $C_{36}$-Dimerfettsäure, Aminoundecansäure, Nonandiamin, Decandiamin und Tetradecandiamin, zum Einsatz kommen, die aus diversen Pflanzenölen gewonnen werden.

Ein für die Monomerherstellung wichtiges Pflanzenöl ist das Rizinusöl, das aus dem Samen des afrikanischen Wunderbaumes (Rizinus Communis) gewonnen wird. Das Rizinusöl besteht zu 80 bis 90% aus dem Triglyzerid der Rizinolsäure sowie aus weiteren Glyceriden verschiedener $C_{18}$-Fettsäuren. Seit Jahrtausenden wird Rizinusöl bereits als Heilmittel verwendet, es findet aber auch seit langem bei technischen Ölen, Kosmetika, Beschichtungen und Hydraulikölen Einsatz. Die Sebacinsäure wird durch alkalische Spaltung von Rizinusöl bei hohen Temperaturen und nachfolgender Behandlung mit Salzsäure erhalten. Aus dem Methylester der Rizinussäure wird durch pyrolytische Zersetzung Heptaldehyd und Methyl-10-undecensäureester gewonnen, wobei letzterer über mehrere Reaktionsstufen in die 11-Aminoundecansäure überführt wird.

Azelainsäure und Brassilsäure basieren ebenfalls auf natürlichen Rohstoffen, sie werden durch Ozonolyse der Öl- bzw. Erucasäure hergestellt. Die Erucasäure wird aus dem Samen von Raps, Senf, Goldlack oder Kresse gewonnen.

Die $C_{36}$-Dimersäuren werden durch thermische Dimerisierung von ungesättigten $C_{18}$-Carbonsäuren oder deren Ester hergestellt. Ausgangsstoffe sind z. B. Tallölfettsäuren sowie die Öl - oder Linolensäure.

Nonandiamin, Decandiamin und Tridecandiamin beruhen ebenfalls auf natürlichen Rohstoffen, da sie aus den entsprechenden Dicarbonsäuren z. B. über die Dinitrilroute hergestellt werden.

Weitere Rohstoffe, beispielsweise gewonnen durch mikrobiologische Fermentation, befinden sich im industriellen Aufbau und können ebenfalls eingesetzt werden.

Das transparente Copolyamid (A) ist also besonders bevorzugt dadurch charakterisiert, dass es einen Bioanteil nach ASTM D6866-06a von mindestens 54 Gew.-% oder von mindestens 58 Gew.-% aufweist. Ganz besonders bevorzugt ist ein Bioanteil von mindestens 60 Gew.-% oder von mindestens 65 Gew.-%, insbesondere liegt er im Bereich von 50 bis 75 Gew.-%.

Damit die erfindungsgemäßen Polyamidformmassen die oben geforderten Eigenschaften besitzen, muss insbesondere die Konzentration der cycloaliphatischen Diamine in einem Konzentrationsbereich von 50 bis 80 Mol-%, bevorzugt im Bereich von 55 bis 75 Mol-% und besonders bevorzugt im Bereich von 60 bis 75 Mol%, bezogen auf den Gesamtdiamingehalt, liegen. Die Konzentration an aliphatischem Diamin, insbesondere 1,10-Decandiamin, beträgt erfindungsgemäß immer mindestens 20 Mol-%, bevorzugt mindestens 32 Mol-%, bezogen auf den Gesamtdiamingehalt und liegt bevorzugt in einem Bereich von 25 bis 45 Mol-% und ganz bevorzugt in einem Bereich von 25 bis 40 Mol-%, bezogen auf den Gesamtdiamingehalt.

Erfindungsgemäß wird eine Mischung aus 50 bis 90 Mol-% Bis-(4-amino-3-methylcyclohexyl)-methan (MACM) und/oder Bis-(4-Amino-3-ethyl-cyclohexyl)-methan (EACM) und/oder Bis-(4-Amino-3,5-dimethy-cyclohexyl)-methan (TMACM) und/oder Bis-(4-amino-3-methyl-cyclohexyl)-propan und 10 bis 50 Mol-% mindestens eines aliphatischen Diamins mit 9 bis 14 Kohlenstoffatomen, besonders bevorzugt mit 10 bis 14 Kohlenstoffatomen, insbesondere Decandiamin, jeweils bezogen auf die Gesamtmenge an Diaminen, verwendet. Bevorzugt werden erfindungsgemäß die aliphatischen Diamine 1,9-Nonandiamin, 1,10-Decandiamin, 1,11-Undecandiamin, 1,12-Dodecandiamin, 1, 13-Tridecandiamin oder 1,14-Tetradecandiamin eingesetzt, wobei besonders bevorzugt als aliphatisches Diamin 1,10-Decandiamin, zu mindestens20, 30, 50 oder 100 Mol-% bezogen auf den Gesamtgehalt an aliphatischem Diaminen, verwendet wird.

Der in dieser Anmeldung verwendete Ausdruck PACM steht für die ISO-Bezeichnung Bis-(4-amino-cyclohexyl)-methan, welches unter dem Handelnamen 4,4'-Diaminodicyclohexylmethan als Dicykan-Typ (CAS Nr. 1761-71-3) kommerziell erhältlich ist. Der Ausdruck MACM steht für die ISO-Bezeichnung Bis-(4-amino-3-methyl-cyclohexyl)-methan, welches unter dem Handelsnamen 3,3'-Dimethyl-4,4'-diaminodicyclohexylmethan als Laromin C260-Typ (CAS Nr. 6864-37-5) kommerziell erhältlich ist. Die Ausdrücke EACM und TMACM stehen für Bis-(4-Amino-3-ethyl-cyclohexyl)-methan (EACM) und/oder Bis-(4-Amino-3,5-dimethy-cyclohexyl)-methan (TMACM).

Im Sinne der vorliegenden Erfindung ist beabsichtigt, dass die Ausdrücke PACM, MACM, EACM und TMACM alle Trivialnamen, Handelsnamen oder andere dem Fachmann geläufige Namen einschließen, die den chemischen Strukturen der vorstehenden Verbindungen entsprechen.

Die aliphatischen Dicarbonsäuren haben bevorzugt 10 bis 36 Kohlenstoffatome, insbesondere 10 bis 18 Kohlenstoffatome.

Bevorzugt wird als aliphatische Disäure eine Säure, ausgewählt aus der Gruppe, bestehend aus Azelainsäure, Sebacinsäure, Undecandisäure, Dodecandisäure, Tridecandisäure, Tetradecandisäure, Pentadecandisäure, Hexadecandisäure, Heptadecandisäure, Oktadecandisäure, $C_{36}$-Dimerfettsäure und Gemischen daraus, wobei insbesondere die aliphatische Disäure zu mindestens 20 Mol-%, bevorzugt zu mindestens 30 Mol-%, besonders bevorzugt zu mindestens 50 Mol% aus Sebacinsäure, bezogen auf die Gesamtmenge an Disäuren, besteht, wobei ganz besonders bevorzugt die aliphatische Disäure ausschließlich Sebacinsäure ist, eingesetzt.

Das Copolyamid (A) weist eine Glasübergangstemperatur ($T_g$) von wenigstens 80°C, bevorzugt von wenigstens 85°C, insbesondere von wenigstens 90°C oder 100°C auf. Andererseits hat das Copolyamid (A) eine Glasübergangstemperatur ($T_g$) von höchstens 150°C, bevorzugt von höchstens 135°C und besonders bevorzugt von höchstens 125°C. Damit weist Komponente (A) eine bevorzugte Glasübergangstemperatur ($T_g$) im Bereich von 80 bis 135°C oder 90 bis 135°C oder 100 bis 135°C, insbesondere im Bereich von 85 bis 125°C auf.

Dieser $T_g$-Bereich wird in Kombination mit den cycloaliphatischen Systemen, wie z. B. MACM10 oder MACM12, erreicht, wenn ein genügend großer Anteil, wie dies zuvor für die Copolyamide (A) beschrieben wurde, durch aliphatische Anteile, wie z. B. PA 1010 oder PA 1012, ersetzt werden. Durch die erfindungsgemäße Reduktion der Glasübergangstemperatur ($T_g$), im Vergleich zu Homopolyamiden auf Basis cycloaliphatischer Diamine, wird erfindungsgemäß eine höhere Fliessfähigkeit der Polymerschmelze und damit eine bessere Verarbeitbarkeit erzielt. Da die erfindungsgemäßen Polyamidformmassen weniger rasch erstarren (als Homopolyamidformmassen) werden im Spritzguss durch Vermeiden von Fließlinien oder sonstigen Artefakten eine qualitativ bessere Oberfläche (glattere Oberfläche) und höhere Bindenahtfestigkeiten erreicht. Darüber hinaus lassen sich die erfindungsgemäßen Copolyamide schonender, also bei (10°C bis 30°C) tieferen Temperaturen herstellen und verarbeiten, so dass daraus gefertigte Formteil deutlich weniger Einschlüsse (von der Polykondensation herrührend) und Verfärbungen aufweisen, was insbesondere für transparente Werkstoffe und deren Anwendungen im optischen Bereich von herausragender Bedeutung ist.

Als Komponente (B) wird ein weiteres Polymer eingesetzt, das bevorzugt ein amorphes oder teilkristallines Polyamid oder Copolyamid gemäß der nachfolgenden Formel (II) ist:

$$(MACMX)_x/(PACMY)_y/(MXDV)_v/LC_z \qquad (II),$$

wobei

X, Y, V = aliphatische Dicarbonsäure(n) mit 9 bis 18 und 36 Kohlenstoffatomen sowie Terephthalsäure (T) und Isophthalsäure (I), sowie Mischungen davon

$$x = 0 - 100 \text{ Gew.-}\%, y = 0 - 100 \text{ Gew.-}\%, v = 0 - 100 \text{ Gew.-}\%,$$

LC = Lactam(e) und/oder Aminocarbonsäure(n) mit 6 bis 12 Kohlenstoffatomen, z = 0 - 100 Gew.-%,

$$v + x + y + z = 100 \text{ Gew.-}\%.$$

Bevorzugte Vertreter dieses Typs der Komponente (B) sind beispielsweise folgende Polyamide oder Copolyamide: MACM10, MACM12, MACM14, MACMI/12, MACMI/MACMT/12, MACMI/PACMT/12, PA11, PA12, wobei I für Isophthalsäure und T für Terephthalsäure steht.

Darüber hinaus kann das weitere Polymer (Komponente (B)) ausgewählt werden aus der Gruppe, bestehend aus Polyetheresteramiden, Polyetheramiden, Polyesteramiden oder deren Gemischen. Diese Copolymere können statistisch, alternierend oder blockweise aufgebaut sein. Der Polyamidanteil basiert dabei bevorzugt auf den Polyamiden PA6, PA66, PA69, PA610, PA612, PA99, PA1010, PA1012, PA1014, PA11, PA12 oder deren Mischungen. Bevorzugt sind die Polamidtypen PA1010, PA11 und PA 12. Die Polyetherkomponenten dieser Copolymere basieren auf den Diolen oder Diaminen der Polyethylengykole und/oder Polypropylenglykole und/oder Polytetramethylengykole. Die Ester- oder Polyester

komponenten beruhen auf Polyestern aliphatischer und/oder aromatischer Dicarbonsäuren mit aliphatischer Diolen, bevorzugt auf Dimerfettsäurediolen.

Die erfindungsgemäßen Polyamidformmassen enthalten bevorzugt:

55 bis 100 Gew.-% Komponente (A),
0 bis 45 Gew.-% Komponente (B),
0 bis 5 Gew.-% Komponente (C),

und besonders bevorzugt:

65 bis 90 Gew.-% Komponente (A),
10 bis 35 Gew.-% Komponente (B),
0 bis 5 Gew.-% Komponente (C).

Die erfindungsgemäßen Polyamidformmassen können aber die üblichen Additive (Komponente C) in den üblicherweise geringen Anteilen (weniger als 10 Gew.-%, bevorzugtermaßen weniger als 5 Gew.-%, insbesondere bevorzugt weniger als 3 Gew.-%) aufweisen. Somit liegt die Konzentration der Additive (Komponente C) bevorzugt in einem Bereich von 0,01 bis 5 Gew.-%, insbesondere in einem Bereich von 0,3 bis 3 Gew.-%. Bei den genannten Additiven kann es sich um Stabilisatoren wie UV-Stabilisatoren, Hitzestabilisatoren, Radikalfänger und/oder um Verarbeitungshilfsstoffe, Einschlussverhinderer, Gleitmittel, Entformungshilfsstoffe, Weichmacher und/oder um funktionelle Additive bevorzugt zur Beeinflussung optischer Eigenschaften wie insbesondere des Brechungsindexes oder um Kombinationen oder Mischungen davon handeln. Desweiteren können die Formmassen (als Komponente C) nanoskalige Füll- und/oder Funktionsstoffe, wie z. B. Schichtmineralien oder Metalloxide, die den Brechungsindex erhöhen, oder optische Aufheller oder Farbstoffe, wie z. B. photochrome Farbstoffe beinhalten.

Im Sinne der Erfindung können die Formmassen außerdem dem Fachmann geläufige Füll- und/oder Zuschlagstoffe, beispielsweise Glasfasern, Glaskugeln, Carbonfasern, Russ, Graphit, Flammschutzmittel, Mineral wie zum Beispiel Titandioxid, Calciumcarbonat oder Bariumsulfat, oder beispielsweise Schlagzähmodifikatoren, wie funktionalisierte Polyolefine, enthalten.

Bevorzugte Schlagzähmodifikatoren stammen aus der Gruppe, ausgewählt aus säuremodifizierten Ethylen-α-Olefin-Copolymeren, Ethylen-Glycidylmethacrylsäure-Copolymeren und Methacrylat-Butadien-Styrol-Copolymeren.

Den erfindungsgemäßen Formmassen können aber auch Füll- oder Verstärkungsmittel zugegeben werden. In diesem Fall sind die aus den Formmassen hergestellten Formteile natürlich nicht transparent. Neben Glas- und Kohlenstofffasern können als Verstärkungsmittel besonders solche auf Basis von nachwachsenden Rohstoffen und Bioanteilen über 50% eingesetzt werden. Besonders bevorzugt werden Naturfasern, wie z. B. Cellulose-, Hanf-, Flachs-, Baumwoll-, Woll- oder Holzfasern eingesetzt.

Die Herstellung der Polymerkomponenten (A) und (B) erfolgt in bekannten Druckgefäßen. Zunächst wird eine Druckphase bei 250°C bis 320°C gefahren. Danach folgt die Entspannung bei 250°C bis 320°C. Die Entgasung wird bei 260°C bis 320°C durchgeführt. Anschließend wird die Polyamidformmasse in Strangform ausgetragen, im Wasserbad auf 5°C bis 80°C gekühlt und granuliert. Das Granulat wird 12 Stunden bei 80°C auf einen Wassergehalt unter 0,06% getrocknet. Während der Trocknung mit gleichzeitiger Umwälzung des Granulates können Additive wie Gleitmittel, Farbstoffe, Stabilisatoren oder andere auf das Granulat aufgetragen oder aufgesintert werden.

Zur Einstellung der gewünschten relativen Viskosität (Komponenten (A), (B)), gemessen in 0,5 gew.-%iger m-Kresollösung, von 1,45 bis 2,30, bevorzugt 1,55 bis 2,00 und insbesondere bevorzugt von 1,60 bis 1,90 können entweder das Diamin oder die Dicarbonsäuren in geringem Überschuss von 0,01 bis 2 Mol-% eingesetzt werden. Bevorzugt wird die Regelung mit Monoamin oder Monocarbonsäuren von 0,01 bis 2,0 Gew.-%, bevorzugt 0,05 bis 0,5 Gew.-% durchgeführt. Geeignete Regler sind Benzoesäure, Essigsäure, Propionsäure, Stearylamin oder deren Mischungen. Besonders bevorzugt sind Regler mit Amin- oder Carbonsäuregruppen, die zusätzlich Stabilisatorgruppen des Typs HALS oder des Typs tert-Butyl-Phenol enthalten, wie beispielsweise Triacetondiamin oder Isophthalsäure-Di-Triacetondiamin-Derivate.

Geeignete Katalysatoren zur Beschleunigung der Polykondensationsreaktion sind phosphorhaltige Säuren, wie beispielsweise $H_3PO_2$, $H_3PO_3$, $H_3PO_4$, deren Salze oder organischen Derivate, die gleichzeitig eine Reduzierung der Verfärbung während der Verarbeitung bewirken. Die Katalysatoren werden im Bereich von 0,01 bis 0,5 Gew.-%, bevorzugt im Bereich von 0,03 bis 0,1 Gew.-% zugegeben. Geeignete Entschäumer zur Vermeidung der Schaumbildung während der Entgasung sind wässrige Emulsionen, die Silicone oder Siliconderivate im Bereich von 0,01 bis 1,0 Gew. %, bevorzugt im Bereich von 0,01 bis 0,10 bei 10%iger Emulsion enthalten.

Geeignete Hitze- oder UV-Stabilisatoren können bereits vor der Polykondensation dem Ansatz in Mengen von 0,01 bis 0,5 Gew.-% zugegeben werden. Bevorzugt werden hochschmelzende Typen eingesetzt. Besonders bevorzugt wird Irganox 1098 verwendet.

Die Ausrüstung der erfindungsgemäßen, transparenten Formmassen mit Additiven wie beispielsweise Stabilisatoren, Gleitmittel wie beispielsweise Paraffinöle oder Stearate, Farbstoffe, Füllstoffe, Schlagzähmodifikatoren wie beispielsweise Terpolymere aus Ethylen-Glycidyl-Methacrylat, bevorzugt mit einem Brechungsindex im Bereich der erfindungsgemäßen Formmassen oder Maleinsäureanhydrid gepfropfte Polyethylene, Propylene oder Verstärkungsstoffe wie beispielsweise transparent dispergierbare Nano-Partikel oder Glaskugeln oder Glasfasern, oder Mischungen der Additive, kann durch nachfolgende bekannte Mischverfahren, insbesondere Extrusion auf Ein- oder Mehrwellenextrudern mit Massetemperaturen zwischen 250°C bis 350°C, erfolgen.

Geeignete Verfahren zur Herstellung hochtransparenter Formteile aus den erfindungsgemäßen, transparenten Polyamidformmassen sind Spritzgießverfahren oder Spritzprägeverfahren bei Massetemperaturen von 230°C bis 320°C, wobei das Werkzeug mit Temperaturen von 40°C bis 130°C eingestellt wird und wobei gegebenenfalls das Werkzeug mit Temperaturen von 40°C bis 130°C nach dem Füllen der Kavität einen Prägedruck auf das heiße Formteil aufbringt. Besonders geeignete Verfahren zur Herstellung von fehlerfreien, spannungsarmen Oberflächen des Formteils aus den erfindungsgemäßen, transparenten Polyamidformmassen, wie beispielsweise Linsen für Brillen oder hochwertige Gehäuseteile, ist ein Expansionsspritzprägeprozess, wobei Kavitäten mit Wandstärken von 1 bis 5mm gefüllt werden und anschließend die Werkzeugkavität bei permanenter Füllung auf höhere Wandstärken auseinander gefahren wird.

Geeignete Verfahren zur Herstellung von Folien, Rohren und Halbzeugen in Ein- oder Mehrschichtausführung aus den erfindungsgemäßen, transparenten Polyamidformmassen sind Extrusionsverfahren auf Ein- oder Mehrwellenextrudern mit Massetemperaturen zwischen 250°C bis 350°C, wobei je nach Verträglichkeit der verschiedenen Schichten geeignete Haftvermittler in Form entsprechender Copolymere oder Blends eingesetzt werden können.

Formteile, die aus den erfindungsgemäßen Polyamidformmassen aufgebaut sind, können miteinander nach üblichen Verfahren wie beispielsweise durch Ultraschallschweißen, Glühdrahtschweißen, Friktionsschweißen, Rotationsschweißen oder Laserschweißen durch Ausrüstung mit laseraktiven Farbstoffen mit Absorption im Bereich 800nm bis 2000nm, miteinander verbunden werden.

Geeignete Verfahren zur Herstellung von Hohlkörpern und Flaschen in Ein- oder Mehrschichtausführung aus den erfindungsgemäßen, transparenten Polyamidformmassen sind Spritzblasverfahren, Spritzstreckblasverfahren und Extrusionsblasverfahren.

Die erfindungsgemäßen Formmassen können auch zu Folien, wie z. B. Flachfolien, Blasfolien, Gießfolien, Mehrschichtfolien verarbeitet werden. Eine Weiterverarbeitung der Folien erfolgt bevorzugt durch Kaschieren, Hinterspritzen, Recken, Verstrecken, Bedrucken oder Färben.

Formteile können massegefärbt oder mittels sogenannter Tauchbäder nachträglich eingefärbt werden. Formteile werden gegebenenfalls durch Fräsen, Bohren, Schleifen, Lasermarkieren, - schneiden und/oder -schweißen bearbeitet.

Geeignete Verwendungen für Formteile, die aus den erfindungsgemäßen, transparenten Polyamidformmassen aufgebaut sind, sind Schaugläser für Heizungstechnik mit direktem Ölkontakt, Filtertassen für Trinkwasseraufbereitung, Babyflaschen, Flaschen für Carbonisierung, Essgeschirr, Durchflussmesser für Gase oder flüssige Medien, Uhrengehäuse, Gehäuse für Armbanduhren, Lampengehäuse und Reflektoren für Autolampen.

Die Erfindung wird nun näher durch die folgenden Beispiele erläutert, ohne sie jedoch darauf zu beschränken.

Beispiele

Die Herstellung der erfindungsgemäßen Polyamidformmasse erfolgt in bekannten Versuchs-Druckautoklaven mit 130 L Volumen. Zunächst wird eine Druckphase bei 290°C gefahren. Danach folgt die Entspannung bei 280°C. Die Entgasung wird bei 280°C durchgeführt. Anschließend wird die Polyamidformmasse in Strangform ausgetragen, im Wasserbad gekühlt und granuliert. Das Granulat wird 12h bei 80°C auf einen Wassergehalt unter 0,06% getrocknet. Die Herstellung hochtransparenter Formteile bzw. Probekörper aus den erfindungsgemäßen, transparenten Polyamidformmassen wurde auf einer Arburg 420C Allrounder 1000-250 Spritzgießmaschine bei Massetemperaturen von 250°C bis 280°C durchgeführt, wobei das Werkzeug auf die Temperatur von 60°C eingestellt wurde. Die Schneckendrehzahl betrug 150 bis 400 Upm.

Die entstandenen Materialien bzw. Formteile weisen die in Tabelle 1 und 2 aufgeführten Kenndaten auf.

**Tabelle 1**

| | Einheit | **B1** | **B2** | **B3** | **VB1** |
|---|---|---|---|---|---|
| **Zusammensetzung** | | | | | |
| Polyamid (gemäß ISO 1874) | - | MACM10/1010 (66:34) | MACM12/1012 (66:34) | MACM10/100 (60:40) | 101/1010 (50:50) |
| MACM | mol-% | 33 | 33 | 30 | |
| Isophthalsäure | mol-% | 0 | 0 | 0 | 25 |
| 1,10-Decandiamin | mol-% | 17 | 17 | 20 | 50 |
| Sebacinsäure | mol-% | 50 | 0 | 50 | 25 |
| Dodecandisäure | mol-% | 0 | 50 | 0 | 0 |
| Bioanteil gemäß ASTM D6866-06a | % | 59 | 62 | 62,5 | 80 |
| **Eigenschaften** | | | | | |
| MVR (275°C/5kg) | ccm/ 10min | 85 | 52 | 72 | 42 |
| Glasübergangstemperatur ($T_g$) | °C | 115 | 110 | 113 | 59 |
| Schmelztemperatur | °C | - | - | - | - |
| Schmelzwärme | J/g | < 5 | < 5 | < 5 | < 5 |
| Relative Viskosität | - | 1,80 | 1,85 | 1,80 | 1,95 |
| Zug-E-Modul | MPa | 1'700 | 1650 | 1700 | 1630 |
| Reissfestigkeit | MPa | 65 | 60 | 63 | 57 |
| Reissdehnung | % | 180 | 170 | 190 | 210 |
| Schlagzähigkeit Charpy 23°C | kJ/m$^2$ | ohne Bruch | ohne Bruch | ohne Bruch | 120 |
| Schlagzähigkeit Charpy -30°C | kJ/m$^2$ | ohne Bruch | ohne Bruch | ohne Bruch | 90 |
| Kerbschlagzähigkeit Charpy 23°C | kJ/m$^2$ | 7 | 9 | 7 | 5 |
| Deformation im Klimatest 55°C/95% rF/168h | mm/ 100mm | 0,6 | 0,9 | 1,2 | > 10 |
| Wasseraufnahme 23°C/ 50% relative Feuchte | % | 1,1 | n.b. | n.b. | n.b. |
| Lichttransmission nach ASTM D 1003 | % | 93 | 93 | 93 | 93 |
| Haze nach ASTM D 1003 | % | 2,3 | 7,2 | 4,5 | 1,2 |
| Gloss 20° | % | 148 | 140 | 145 | 160 |
| Gloss 60° | % | 145 | 135 | 140 | 150 |

**Tabelle 2**

|  | Einheit | **B4** | **B5** | **VB2** | **VB3** |
|---|---|---|---|---|---|
| Zusammensetzung | | | | | |
| Polyamid (gemäss ISO 1874) | - | MACM10/1010 (56:44) | MACM10/1010 (50:50) | MACM10/1010 (46:54) | PACM10/1010 (50:50) |
| MACM | mol-% | 28 | 25 | 23 | 0 |
| PACM | mol-% | 0 | 0 | 0 | 25 |
| 1,10-Decandiamin | mol-% | 22 | 25 | 27 | 25 |
| Sebacinsäure | mol-% | 50 | 50 | 50 | 50 |
| Bioanteil gemäss ASTM D6866-06a | % | 65 | 68 | 70,5 | 62 |
| Eigenschaften | | | | | |
| MVR (275°C/5g) | ccm/10min | 55 | 53 | 80 | n.b. |
| Glasübergangstemperatur ($T_g$) | °C | 104 | 96 | 89 | 84 |
| Schmelzpunkt | °C | - | - | - | 172 |
| Schmelzwärme | J/g | < 5 | < 5 | < 5 | 43 |
| Relative Viskosität | - | 1,84 | 1,86 | 1,78 | 1,82 |
| Zug-E-Modul | MPa | 1680 | 1670 | 1650 | 1610 |
| Reissfestigkeit | MPa | 60 | 60 | 58 | 58 |
| Reissdehnung | % | 190 | 200 | 120 | 230 |
| Schlagzähigkeit Charpy 23°C | kJ/m$^2$ | ohne Bruch | ohne Bruch | ohne Bruch | ohne Bruch |
| Schlagzähigkeit Charpy -30°C | kJ/m$^2$ | ohne Bruch | ohne Bruch | ohne Bruch | ohne Bruch |
| Kerbschlagzähigkeit Charpy 23°C | kJ/m$^2$ | 7 | 7 | 6 | 7 |
| Deformation im Klimatest 55°C/95% rF/168h | mm/ 100mm | 1,9 | 3,6 | 7,8 | 4,5 |
| Wasseraufnahme 23°C/ 50% relative Feuchte | % | 1,0 | 1,0 | 0,99 | n.b. |
| Lichttransmission nach ASTM D1003 | % | 93 | 93 | 93 | 93 |
| Haze nach ASTM D1003 | % | 2,3 | 3,1 | 1,0 | 1,4 |
| Gloss 20° | % | 145 | 140 | 150 | 153 |
| Gloss 60° | % | 140 | 135 | 148 | 145 |
| n.b.: nicht bestimmt | | | | | |

Die transparenten Homopolyamide MACM10 und MACM2 haben eine Glasübergangstemperatur von 165°C bzw. 155°C und eine Schmelzviskosität im Bereich von 15 - 22 cm$^3$/10min (MVR, 275°C/5kg) bei einer Lösungsviskosität (relative Viskosität) im Bereich von 1,85 bis 1,80. Somit besitzen die erfindungsgemäßen Copolyamide im Vergleich zu den bekannten 1-lomopolyamiden eine signifikant niedrigere Schmelzviskosität bei gleicher relativer Viskosität und lassen sich somit leichter verarbeiten. Zudem haben die Formteile gemäß Beispiel 1 nur eine geringfügig größere Deformation im Klimatest (0,6 mm) als Formteile aus dem Homopolyamid MACM10 (Deformation 0,5 mm).
Durch den aliphatischen Anteil im erfindungsgemäßen Copolyamid (Beispiel 1 und 4 und 5) konnte die Wasseraufnahme gegenüber dem transparentem Homopolyamid MACM10, die bei 23°C und 50% relativer Feuchte 1,20% beträgt, nochmals reduziert werden.

Die relative Viskosität ($\eta_{rel}$) wurde bestimmt nach DIN EN ISO 307, in 0,5 gew.-%iger m-Kresollösung bei einer Temperatur von 20°C.

Die Glasumwandlungstemperatur ($T_g$), der Schmelzpunkt ($T_m$) und die Schmelzwärme ($H_m$) wurden bestimmt nach ISO 11357-1/2. Die Differential scanning calorimetry (DSC) wurde mit einer Aufheizrate von 20K/min durchgeführt.

Zug-E-Modul, Reissfestigkeit und Reissdehnung wurden nach ISO 527 mit einer Zuggeschwindigkeit von 1mm/min (Zug-E-Modul) bzw. 50mm/min (Reissfestigkeit, Reissdehnung) am ISO-Zugstab , Norm: ISO/CD 3167, Typ AI, 170 x 20/10 x 4 mm bei Temperatur 23°C bestimmt.

Schlagzähigkeit und Kerbschlagzähigkeit nach Charpy wurden nach ISO 179/keU am ISO-Prüfstab, Norm: ISO/CD 3167, Typ B1, 80 x 10 x 4 mm bei einer Temperatur von -30°C und 23°C gemessen.

Lichttransmission (Transparenz) und Haze wurden nach ASTM D 1003 an Platten der Dimension 2 x 60 x 60 mm oder an Rundplatten 2 x 70 mm bei einer Temperatur von 23°C mit dem Messgerät Haze Gard Plus der Firma Byk Gardner mit der CIE Lichtart C bestimmt. Die Lichttransmissionswerte werden in % der eingestrahlten Lichtmenge angegeben.

Der Glanz wurde nach DIN EN ISO 2813 an einer Rundplatte der Dimension 70 x 2mm bei einer Temperatur von 23°C mit einem Minolta Multi Gloss 268 unter einem Winkel von 20° und 60°gemessen.

Im Klima-Test wurde die Durchbiegung einer Platte der Dimension 100 x 100 x 2 mm unter Eigenlast bei einer Temperatur von 55°C und einer relativen Feuchte von 95% bestimmt. Hierzu wurde die Platte an einer Kante um 25 mm angehoben und die Durchbiegung in der Mitte (Lageänderung gegenüber dem Ausgangszustand) der Platte nach 168h gemessen.

Der MVR (Melt Volume Rate) wurde nach ISO 1133 bei 275°C und einer Belastung von 5 kg bestimmt.

Damit stellt die vorliegende Erfindung neue Polyamidformmassen zur Verfügung, die sich durch eine deutlich bessere Verarbeitbarkeit, insbesondere im Spritzguss, bei akzeptabler Deformation im Klimatest, sehr guter Transparenz, geringem Haze und sogar erhöhtem Bioanteil auszeichnen.

**Patentansprüche**

1. Polyamidformmassen auf Basis von transparenten Copolyamiden zur Herstellung von transparenten Formteilen, wobei die Formmassen enthalten:

   (A) 40 bis 100 Gew.-% mindestens eines transparenten Copolyamids mit einer Glasübergangstemperatur (Tg) von wenigstens 80°C und höchstens 150°C, aufgebaut aus

   mindestens zwei voneinander verschiedenen Diaminen, ausgewählt aus einer Mischung aus

   (a) 50 bis 90 Mol-% Bis-(4-amino-3-methyl- cyclohexyl)-methan (MACM) und/oder Bis-(4-Amino-3-ethyl-cyclohexyl)-methan (EACM) und/oder Bis-(4-Amino-3,5-dimethy- cyclohexyl)-methan (TMACM) und
   (b) 10 bis 50 Mol-% aliphatisches Diamin mit 9 bis 14 Kohlenstoffatomen

   jeweils bezogen auf die Gesamtmenge an Diaminen,
   sowie
   aus einer oder mehreren aliphatischen Dicarbonsäuren, insbesondere mit 6 bis 36 Kohlenstoffatomen,
   (B) 0 bis 60 Gew.-% mindestens eines weiteren Polymeren, ausgewählt aus der Gruppe, bestehend aus amorphen oder teilkristallinen Homo- oder Copolyamiden, Polyetheresteramiden, Polyetheramiden, Polyesteramiden oder deren Gemischen,
   (C) 0 bis 10 Gew.-% übliche Additive, ausgewählt aus der Gruppe, bestehend aus UV-Stabilisatoren, Hitzestabilisatoren, Radikalfängern und/oder Verarbeitungshilfsstoffen, Einschlussverhinderem, Gleitmitteln, Entformungshilfsstoffen, Weichmachern, funktionellen Additiven zur Beeinflussung der optischen Eigenschaften, insbesondere des Brechungsindexes, Schlagzähmodifikatoren, nanoskaligen Füll- und/oder Zuschlagsstoffen, optischen Aufhellern, Farbstoffen oder Mischungen davon, wobei die Summe der Komponenten (A), (B) und (C) 100 Gew.-% ergibt.

2. Polyamidformmassen auf Basis von transparenten Copolyamiden gemäss Anspruch 1, **dadurch gekennzeichnet, dass** das aliphatische Diamin der Komponente (A) Decandiamin ist, welches bevorzugt mindestens 20 Mol-% bezogen auf die Gesamtmenge an Diaminen ausmacht.

3. Polyamidformmassen auf Basis von transparenten Copolyamiden gemäss Anspruch 1 oder 2, **dadurch gekenn-**

**zeichnet, dass** die Copolyamide überwiegend auf Monomeren basieren, die aus nachwachsenden oder erneuerbaren Rohstoffen zugänglich sind und wobei der Bioanteil nach ASTM D6866-068a von Copolyamid (A) und/oder der weiteren Komponente (B) mindestens 50 Gew.%, insbesondere zwischen 50 und 75 Gew.-% beträgt.

4. Polyamidformmassen gemäss einem der Ansprüche 1, 2 oder 3, **dadurch gekennzeichnet, dass** die Konzentration der cycloaliphatischen Diamine in einem Bereich von 50 bis 80 Mol-%, insbesondere im Bereich von 55 bis 75 Mol%, bezogen auf den Gesamtdiamingehalt, liegt, und das aliphatische Diamin in einer Konzentration von 25 bis 45 Mol-%, bezogen auf den Gesamtdiamingehalt, eingesetzt wird.

5. Polyamidformmassen gemäss einem der Ansprüche 1, 2 oder 3, **dadurch gekennzeichnet, dass** die aliphatische Disäure ausgewählt ist aus der Gruppe, bestehend aus Azelainsäure, Sebacinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure und Gemischen davon, wobei insbesondere die aliphatische Disäure zu mindestens 20 Mol-%, bevorzugt zu mindestens 30 Mol-%, besonders bevorzugt zu mindestens 50 Mol-% aus Sebacinsäure, bezogen auf die Gesamtmenge an Disäuren, besteht, und wobei besonders bevorzugt die aliphatische Disäure ausschliesslich Sebacinsäure ist.

6. Polyamidformmassen gemäss einem oder mehreren der Ansprüche 1 bis 5, **dadurch gekennzeichnet, dass** das Copolyamid (A) eine Glasübergangstemperatur von wenigstens 85°C, insbesondere von 90°C bis 135°C, besonders bevorzugt von wenigstens 100°C bis 135°C, aufweist.

7. Polyamidformmassen gemäss einem oder mehreren der Ansprüche 1 bis 6, **dadurch gekennzeichnet, dass** das Copolyamid (A) ausgewählt ist aus der Gruppe, bestehend aus MACM9/109, MACM10/1010, MACM12/1012 und MACM14/1014.

8. Polyamidformmassen gemäss einem der vorhergehenden Ansprüche 1 bis 7, **dadurch gekennzeichnet, dass** die Polyamidformmasse ein Blend aus Komponente (A) mit einem zweiten Polymer (Komponente (B)) enthält und als Komponente (B) ein Polymer eingesetzt wird, das ein amorphes oder teilkristallines Polyamid oder Copolyamid ist, charakterisiert durch Ketten mit der nachstehenden Formel (II):

$$(MACMX)_x(PACMY)_y/(MXDV)_v/LC_z \qquad (II),$$

worin bedeuten:

X, Y, V = aliphatische Dicarbonsäure(n) mit 9 bis 18 und 36 Kohlenstoffatomen sowie Terephthalsäure (T) und Isophthalsäure (I), sowie Mischungen davon x = 0 - 100 Gew.%,
y = 0 - 100 Gew.-%,
v = 0 - 100 Gew.%,
LC = Lactam(e) und/oder Aminocarbonsäure(n) mit 6 bis 12 Kohlenstoffatomen,
z = 0 - 100 Gew.-%,

$$v + x + y + z = 100 \text{ Gew.-\%.}$$

9. Verfahren zur Herstellung der Polyamidformmassen gemäss einem der Ansprüche 1 bis 8, **dadurch gekennzeichnet, dass** die Herstellung der Polymerkomponenten (A) und (B) in bekannten Druckgefässen erfolgt, mit einer Druckphase bei 250°C bis 320°C mit einer nachfolgenden Entspannung bei 250°C bis 320°C, mit einer nachfolgenden Entgasung bei 260°C bis 320°C sowie Austragen der Polyamidformmassen in Strangform, Abkühlen, Granulieren und Trocknen des Granulats, Compoundieren der Komponenten (A), und gegebenenfalls (B), und gegebenenfalls (C) als Granulat und Formen in einem Extruder bei Massetemperaturen von 220°C bis 350°C zu einem Strang, Schneiden mit geeigneten Granulatoren zu Pellets, wobei während der Compoundierung Additive zugegeben werden können, die zur Ausrüstung der Formmasse erwünscht sind, wie Verarbeitungsstabilisatoren, Farbpigmente, UV-Absorber, Hitzestabilisatoren, Flammschutzmittel und andere transparente Polyamide oder Polyamid 12.

10. Formteil, erhältlich aus den Polyamidformmassen gemäss einem der Ansprüche 1 bis 8 mittels Spritzgiessverfahren und Spritzprägeverfahren bei Massetemperaturen von 230°C bis 320°C, wobei das Werkzeug mit Temperaturen von 40°C bis 130°C eingestellt wird und wobei gegebenenfalls das Werkzeug mit Temperaturen von 40°C bis 130°C nach dem Füllen der Kavität einen Prägedruck auf das heisse Formteil aufbringt.

11. Formteil gemäss Anspruch 10, **gekennzeichnet durch** eine Lichttransmission, gemessen nach ASTM D 1003, bestimmt an Platten mit einer Dimension 2 x 60 x 60 mm oder an Rundplatten der Dimension 2 x 70 mm, bei einer Temperatur von 23°C, mit dem Messgerät Haze Gard Plus der Firma Byk Gardner mit der CIE Lichtart C, wobei die Lichttransmission wenigstens 85%, bevorzugt wenigstens 88% und besonders bevorzugt wenigstens 90% beträgt.

12. Formteil gemäss einem der hervorgehenden Ansprüche, **gekennzeichnet durch** eine Trübung (Haze), gemessen nach ASTM D 1003, einer aus der transparenten Polyamidformmasse nach den Ansprüchen 1 bis 11 hergestellten Platte mit einer Dicke von 2 mm von höchstens 10%, bevorzugt von höchstens 5% und ganz besonders bevorzugt von höchstens 3%.

13. Formteil gemäss einem der vorhergehenden Ansprüche, hergestellt aus einer Formmasse gemäss einem der Ansprüche 1 bis 8, **gekennzeichnet durch** eine Deformation des Formteils im Klimatest von höchstens 4 mm, bevorzugt von höchstens 3 mm und besonders bevorzugt von höchstens 2 mm, wobei im Klimatest die Durchbiegung einer Platte der Dimension 100 x 100 x 2 mm unter Eigenlast bei einer Temperatur von 55°C und einer relativen Feuchte von 95% bestimmt wird und hierzu die Platte an einer Kante um 25mm angehoben und die Durchbiegung in der Mitte (Lageänderung gegenüber dem Ausgangszustand) der Platte nach 168 Stunden gemessen wird.

**Claims**

1. A polyamide molding composition based on transparent copolyamides for producing transparent moldings, where the molding composition comprises:

(A) from 40 to 100% by weight of at least one transparent copolyamide with a glass transition temperature ($T_g$) of at least 80°C and at most 150°C, composed of

- at least two diamines differing from one another, selected from a mixture of

(a) from 50 to 90 mol% of bis(4-amino-3-methylcyclohexyl) methane (MACM), and/or bis(4--amino-3-ethylcyclohexyl)methane (EACM), and/or bis(4-amino-3,5-dimethylcyclohexyl)methane (TMACM), and (b) from 10 to 50 mol% of aliphatic diamine having from 9 to 14 carbon atoms, based in each case on the total amount of diamines, and also

- of one or more aliphatic dicarboxylic acids, in particular having from 6 to 36 carbon atoms,

(B) from 0 to 60% by weight of at least one further polymer selected from the group consisting of amorphous or semicrystalline homo- or copolyamides, polyetheresteramides, polyetheramides, polyesteramides, or a mixture of these,
(C) from 0 to 10% by weight of conventional additives selected from the group consisting of UV stabilizers, heat stabilizers, free-radical scavengers, and/or processing aids, inclusion inhibitors, lubricants, demolding aids, plasticizers, functional additives for influencing optical properties, in particular refractive index, impact modifiers, nanoscale fillers and/or additional nanoscale materials, optical brighteners, dyes, or a mixture thereof,

where the entirety of components (A), (B), and (C) gives 100% by weight.

2. The polyamide molding composition based on transparent copolyamides as claimed in claim 1, **characterized in that** the aliphatic diamine of component (A) is decanediamine, which preferably makes up 20 mol% of decanediamine of the total amount of diamines.

3. The polyamide molding composition based on transparent copolyamides as claimed in claim 1 or 2, **characterized in that** the copolyamides are mainly based on monomers which are accessible from renewable raw materials, and where the biocontent to ASTM D6866-068a of copolyamide (A) and/or of the further component (B) is at least 50% by weight, in particular from 50 to 75% by weight.

4. The polyamide molding composition as claimed in claim 1, 2 or 3, **characterized in that** the concentration of the cycloaliphatic diamines is in the range from 50 to 80 mol%, in particular in the range from 55 to 75 mol%, based on total diamine content, and the aliphatic diamine is used at a concentration of from 25 to 45 mol%, based on total diamine content.

5. The polyamide molding composition as claimed in claim 1, 2 or 3, **characterized in that** the aliphatic diacid has been selected from the group consisting of azelaic acid, sebacic acid, undecanedioic acid, dodecanedioic acid, tridecanedioic acid, tetradecanedioic acid, pentadecanedioic acid, hexadecanedioic acid, heptadecanedioic acid, octadecanedioic acid, $C_{36}$-dimer fatty acid, and mixtures thereof, where in particular the aliphatic diacid is composed of at least 20 mol% of sebacic acid, preferably at least 30 mol%, particularly preferably at least 50 mol%, based on the total amount of diacids, and where it is particularly preferable that the aliphatic diacid is exclusively sebacic acid.

6. The polyamide molding composition as claimed in one or more of claims 1 to 5, **characterized in that** the glass transition temperature of the copolyamide (A) is at least 85°C, in particular from 90°C to 135°C, particularly preferably from at least 100°C to 135°C.

7. The polyamide molding composition as claimed in one or more of claims 1 to 6, **characterized in that** the copolyamide (A) has been selected from the group consisting of MACM9/109, MACM10/1010, MACM12/1012, and MACM14/1014.

8. The Polyamide molding composition as claimed in any of the preceding claims 1 to 7, **characterized in that** the polyamide molding composition comprises a blend of component (A) with a second polymer (component (B)), and the component (B) used comprises a polymer which is an amorphous or semicrystalline polyamide or copolyamide, **characterized by** chains having the following formula (II):

$$(MACMX)_x / (PACMY)_y / (BDMV)_v / LC_z \qquad (II) ,$$

where the definitions are as follows:

X, Y, and V = aliphatic dicarboxylic acid(s) having from 9 to 18 and 36 carbon atoms, and also terephthalic acid (T) and isophthalic acid (I), and also mixtures thereof
x = from 0 to 100% by weight, y = from 0 to 100% by weight, v = from 0 to 100% by weight,
LC = lactam(s) and/or aminocarboxylic acid(s) having from 6 to 12 carbon atoms,
z = from 0 to 100% by weight,

$$v + x + y + z = 100\% \text{ by weight.}$$

9. A process for producing the polyamide molding compositions as claimed in any of claims 1 to 8, **characterized in that** polymer components (A) and (B) are produced in known pressure vessels, with a pressure phase at from 250°C to 320°C with subsequent depressurization at from 250°C to 320°C, with subsequent devolatilization at from 260°C to 320°C, and also discharge of the polyamide molding compositions in strand form, cooling, pelletization, and drying of the pellets, compounding of components (A) and, if appropriate, (B) and, if appropriate, (C) in the form of pellets, and molding in an extruder at melt temperatures of from 220°C to 350°C to give a strand, cutting by suitable pelletizers to give pellets, where, during the compounding process, additives can be added which are desirable for modifying the molding composition, examples being processing stabilizers, color pigments, UV absorbers, heat stabilizers, flame retardants, and other transparent polyamides, or nylon-12.

10. A molding obtainable from the polyamide molding compositions as claimed in any of claims 1 to 8 by means of injection-molding processes and injection-compression-molding processes at melt temperatures of from 230°C to 320°C, where the mold temperatures are set at from 40°C to 130°C and where, if appropriate, the mold, at temperatures from 40°C to 130°C, applies compression to the hot molding, after material has been charged to the cavity.

11. The molding as claimed in claim 10, **characterized by** light transmittance measured to ASTM D1003, determined on sheets of dimensions 2 x 60 x 60 mm or on disks of dimensions 2 x 70 mm, at a temperature of 23°C, with a haze-gard plus measuring device from Byk Gardner using CIE illuminant C, where light transmittance is at least 85%, preferably at least 88%, and particularly preferably at least 90%.

**12.** The molding as claimed in any of the preceding claims, **characterized by** haze which, measured to ASTM D1003, is at most 10%, preferably at most 5%, and very particularly preferably at most 3%, for a sheet of thickness 2 mm produced from the transparent polyamide molding composition as claimed in claims 1 to 11.

**13.** The molding as claimed in any of the preceding claims, produced from a molding composition as claimed in any of claims 1 to 8, **characterized by** deformation of at most 4 mm of the molding in the controlled-climatic-conditions test, preferably of at most 3 mm, and particularly preferably of at most 2 mm, where the controlled-climatic-conditions test measures the deflection of a sheet of dimensions 100 x 100 x 2 mm is determined in the controlled-climatic-conditions test under its own weight at a temperature of 55°C and with relative humidity of 95%, and to this end one edge of the sheet is raised by 25 mm and the deflection of the sheet is measured in the middle (change of position with respect to initial condition) after 168 hours.

**Revendications**

**1.** Masses de moulage en polyamide à base de copolyamides transparents pour la préparation de pièces moulées transparentes, où les masses de moulage contiennent :

(A) 40 à 100% en poids d'au moins un copolyamide transparent présentant une température de transition vitreuse (Tg) d'au moins 80°C et d'au plus 150°C, constitué par
au moins deux diamines différentes l'une de l'autre, choisies dans un mélange de

(a) 50 à 90% en mole de bis-(4-amino-3-méthyl-cyclohexyl)-méthane (MACM) et/ou de bis-(4-amino-3-éthyl-cyclohexyl)-méthane (EACM) et/ou de bis-(4-amino-3,5-diméthyl-cyclohexyl)-méthane (TMACM) et de
(b) 10-50% en mole de diamine aliphatique comprenant 9 à 14 atomes de carbone,

à chaque fois par rapport à la quantité totale de diamines,
ainsi que par
un ou plusieurs acides dicarboxyliques aliphatiques, comprenant en particulier 6 à 36 atomes de carbone,
(B) 0 à 60% en poids d'au moins un autre polymère, choisi dans le groupe constitué par les homopolyamides ou les copolyamides amorphes ou partiellement cristallins, les polyéther-esteramides, les polyétheramides, les polyesteramides ou leurs mélanges,
(C) 0 à 10% en poids d'additifs usuels, choisis dans le groupe constitué par les stabilisateurs des UV, les stabilisateurs thermiques, les pièges de radicaux et/ou les adjuvants de transformation, les agents qui empêchent les inclusions, les lubrifiants, les adjuvants de démoulage, les plastifiants, les additifs fonctionnels pour influencer les propriétés optiques, en particulier de l'indice de réfraction, les modificateurs de résilience, les charges et/ou additifs à l'échelle du nanomètre, les azurants optiques, les colorants ou leurs mélanges, où la somme des composants (A), (B) et (C) vaut 100% en poids.

**2.** Masses de moulage en polyamide à base de copolyamides transparents selon la revendication 1, **caractérisées en ce que** la diamine aliphatique du composant (A) est la décanediamine, qui représente de préférence au moins 20% en mole par rapport à la quantité totale de diamines.

**3.** Masses de moulage en polyamide à base de copolyamides transparents selon la revendication 1 ou 2, **caractérisées en ce que** les copolyamides sont principalement à base de monomères qui sont accessibles à partir de matières premières qui repoussent ou renouvelables et où la proportion biologique selon la norme ASTM D6866-068a de copolyamide (A) et/ou des autres composants (B) représente au moins 50% en poids, en particulier entre 50 et 75% en poids.

**4.** Masses de moulage en polyamide selon l'une quelconque des revendications 1, 2 ou 3, **caractérisées en ce que** la concentration en diamines cycloaliphatiques se situe dans une plage de 50 à 80% en mole, en particulier dans la plage de 55 à 75% en mole, par rapport à la teneur totale en diamines et la diamine aliphatique est utilisée en une concentration de 25 à 45% en mole, par rapport à la teneur totale en diamines.

**5.** Masses de moulage en polyamide selon l'une quelconque des revendications 1, 2 ou 3, **caractérisées en ce que** le diacide aliphatique est choisi dans le groupe constitue par l'acide azélaïque, sébacique, undécanedioïque, dodécanedioïque, tridécanedioïque, tétradécanedioïque, pentadécanedioïque, hexadécanedioïque, heptadécanedioïque, octadécanedioïque, l'acide gras dimère en C36 et leurs mélanges, où en particulier le diacide aliphatique est constitué à raison d'au moins 20% en mole, de préférence d'au moins 30% en mole, de manière particulièrement préférée d'au moins 50% en mole d'acide sébacique, par rapport à la quantité totale de diacides et où de manière particulièrement préférée le diacide aliphatique est exclusivement de l'acide sébacique.

6.  Masses de moulage en polyamide selon l'une ou plusieurs des revendications 1 à 5, **caractérisées en ce que** le copolyamide (A) présente une température de transition vitreuse d'au moins 85°C, en particulier de 90°C à 135°C, de manière particulièrement préférée d'au moins 100°C à 135°C.

7.  Masses de moulage en polyamide selon l'une ou plusieurs des revendications 1 à 6, **caractérisées en ce que** le copolyamide (A) est choisi dans le groupe constitué par MACM9/109, MACM10/1010, MRCM12/1012 et MACM14/1014.

8.  Masses de moulage en polyamide selon l'une quelconque des revendications précédentes 1 à 7, **caractérisées en ce que** la masse de moulage en polyamide contient un mélange de composant (A) avec un deuxième polymère (composant (B)) et qu'un polymère est utilisé comme composant (B), qui est un polyamide ou un copolyamide amorphe ou partiellement cristallin, **caractérisé par** des chaînes de la formule ci-dessous (II) :

$$(MACMX)_x (PACMY)_y / (MXDV)_v / LC_z \qquad (II)$$

où
X, Y, V = un/des acide (s) dialiphatique(s) comprenant 9
à 18 et 36 atomes de carbone ainsi que l'acide téréphtalique (T) et l'acide isophtalique (I), ainsi que leurs mélanges
x = 0-100% en poids,
y = 0-100% en poids,
v = 0-100% en poids,
LC = lactame(s) et/ou acide(s) aminocarboxylique(s) comprenant 6 à 12 atomes de carbone,
z = 0-100% en poids,

$$v + x + y + z = 100\% \text{ en poids.}$$

9.  Procédé pour la préparation d'une masse de moulage en polyamide selon l'une quelconque des revendications 1. à 8, **caractérisé en ce que** la préparation des composants polymères (A) et (B) est réalisée dans des récipients sous pression connus, avec une phase sous pression à 250°C jusqu'à 320°C, une détente consécutive à 250°C jusqu'à 320°C, un dégazage consécutif à 260°C jusqu'à 320°C et évacuation des masses de moulage en polyamide sous forme de brin, refroidissement, granulation et séchage du produis granulé, compoundage des composants (A), et le cas échéant (B), et le cas échéant (C) sous forme de granulat et moulage dans une extrudeuse à une température de la masse de 220°C à 350°C en un brin, découpe avec des granulateurs appropriés en pellets, où, pendant le compoundage, des additifs peuvent être ajoutés qui sont souhaités pour l'apprêt de la masse de moulage, tels que des stabilisateurs de transformation, des pigments colorés, des absorbants des UV, des stabilisateurs thermiques, des agents ignifuges et d'autres polyamide transparents ou du polyamide 12.

10. Pièce moulée, pouvant être obtenue à partir des masses de moulage en polyamide selon l'une quelconque des revendications 1 à 8 au moyen de procédés de moulage par injection et de procédés d'injection-gaufrage à des températures de la masse de 230°C à 320°C, où l'outil est réglé à des températures de 40°C à 130°C et où le cas échéant l'outil applique, à des températures de 40°C à 130°C, après le remplissage de la cavité, une pression de gaufrage sur la pièce moulée chaude.

11. Pièce moulée selon la revendication 10, **caractérisée par** une transmission de la lumière mesurée selon la norme ASTM D 1003, déterminée sur des plaques présentant une dimension de 2 x 60 x 60 mm ou sur des plaques rondes de dimension 2 x 70 mm, à une température de 23°C, avec l'appareil de mesure Haze Gard Plus de la société Byk Gardner avec le type de lumière CIE C, la transmission de la lumière étant d'au moins 85%, de préférence d'au moins 88% et de manière particulièrement préférée d'au moins 90%.

12. Masse de moulage selon l'une quelconque des revendications précédentes, **caractérisée par** un trouble (Haze - voile), mesuré selon la norme ASTM D 1003, d'une plaque préparée à partir de la masse de moulage en polyamide transparente selon les revendications 1 à 11 présentant une épaisseur de 2 mm, d'au plus 10%, de préférence d'au plus 5% et de manière tout particulièrement préférée d'au plus 3%.

13. Pièce moulée selon l'une quelconque des revendications précédentes, préparée à partir d'une masse de moulage selon l'une quelconque des revendications 1 à 8, **caractérisée par** une déformation de la pièce moulée dans un test climatique d'au plus 4 mm, de préférence d'au plus 3 mm et de manière particulièrement préférée d'au plus 2 mm, où, dans le test climatique, la flexion d'une plaque de dimension 100 x 100 x 2 mm sous son propre poids est déterminée à une température de 55°C et une humidité relative de 95% et à cette fin, la plaque est soulevée d'un côté de 25 mm et la flexion est mesurée au centre de la plaque (modification de la position par rapport à l'état de départ) après 168 heures.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4310970 A1
- DE 10009756 A1
- DE 2217016 A1
- DE 2217016
- EP 0001039 A